# NEUE EUROPÄISCHE PATENTSCHRIFT

(11) **EP 2 691 668 B2**
(45) Veröffentlichungstag und Bekanntmachung des Hinweises auf die Entscheidung über den Einspruch: **16.10.2019**
(45) Hinweis auf die Patenterteilung: 18.05.2016
(21) Anmeldenummer: 12718571.8
(22) Anmeldetag: 19.03.2012
(51) Int. Cl.: F16D 13/75

(54) **NACHSTELLEINRICHTUNG EINES KOPPLUNGSAGGREGATS**
CLUTCH ADJUSTMENT DEVICE
SYSTÈME DE RATTRAPPAGE DE JEU D'UN EMBRAYAGE

(30) Priorität: 31.03.2011 DE 102011015635; 14.02.2012 DE 102012202209
(43) Veröffentlichungstag der Anmeldung: 05.02.2014
(73) Patentinhaber: Schaeffler Technologies AG & Co. KG, 91074 Herzogenaurach (DE)
(72) Erfinder: PFEIFER, Patrick, 77815 Bühl (DE); BÖHME, David, 77830 Bühlertal (DE)
(86) Internationale Anmeldenummer: PCT/DE2012/000285
(87) Internationale Veröffentlichungsnummer: WO 2012/130210

(56) Entgegenhaltungen:
- DE-A1- 2 319 275
- DE-A1- 10 048 555
- DE-A1- 10 049 649
- DE-A1- 19 510 745
- DE-A1-102008 033 030
- DE-A1-102008 042 988
- DE-C- 90 581
- FR-A- 339 860
- FR-A- 1 024 494
- FR-A1- 2 731 754
- FR-A1- 2 793 856
- GB-A- 1 001 384
- GB-A- 2 311 339
- JP-A- 2000 145 852
- US-A- 4 380 847
- US-A- 5 957 442
- US-A1- 2004 222 060

## Beschreibung

Die Erfindung betrifft eine Nachstelleinrichtung für eine Reibungskupplung gemäß dem Oberbegriff des Patentanspruchs 1.

Reibungskupplungen eines Kupplungsaggregats können zum Ausgleich eines auftretenden Verschleißes von Reibbelägen mit einer kraftgesteuerten Nachstelleinrichtung zusammenwirken. Hierbei wird eine infolge eines Verschleißes ungünstige Entwicklung der Anpresskraft eines eine Gegenplatte der Reibungskupplung beaufschlagenden Betätigungssystems zur Bewegung der Anpressplatte, beispielsweise einer als Tellerfeder ausgestalteten Hebelfeder, erfasst und abhängig von der Anpresskraft eine Nachstellung bewirkt.

Aus DE 10 2008 033 030 A1 ist eine kraftgesteuerte Nachstelleinrichtung für eine Reibungskupplung eines Kupplungsaggregats bekannt, die auf den Oberbegriff des Patentanspruchs 1 lesbar ist, bei der ein an einer Gegenrampe abgleitender Sensierring vorgesehen ist, der in Umfangsrichtung mit einer Federkraft einer Zugfeder relativ zu einem Kupplungsgehäuseteil beaufschlagt ist. Die Zugfeder zur Bereitstellung einer Federkraft in Umfangsrichtung auf den Sensierring relativ zum Kupplungsgehäuseteil weist an beiden Enden halbkreisförmig umgebogne Haken ("halbe deutsche Öse") auf, mit denen die Zugfeder in entsprechende Aussparungen des Sensierrings und des Kupplungsgehäuseteils eingehakt werden kann. Der Sensierring wird mit Hilfe einer an dem Kupplungsgehäuseteil abgestützten Klemmfeder reibschlüssig gegen eine Tellerfeder zum Bewegen der Anpressplatte auf die Gegenplatte zu arretiert. Die Klemmfeder ist mit der Tellerfeder verbunden. Bei einem Verschleiß von Reibbelägen zum Übertragen eines Drehmoments an eine Kupplungsscheibe erhöht sich der Hubweg der Anpressplatte, wodurch die Tellerfeder einen entsprechend großen Hub zum Schließen der Reibungskupplung ausführen muss. Durch den größeren Hub kann die Klemmfeder von der Tellerfeder zumindest soweit von dem Sensierring wegbewegt werden, dass die von der Klemmfeder aufgebrachte Haltekraft auf den Sensierring sich verringert. Bei einem ein tolerierbares Ausmaß übersteigenden Verschleiß ist der Hub der Tellerfeder so groß, dass der Sensierring die reibschlüssig aufgebrachte Klemmkraft der Klemmfeder überwinden kann, wodurch der Sensierring von der von der Zugfeder aufgebrachten Federkraft in Umfangsrichtung um einen Winkelbetrag verdreht wird. Der in axialer Richtung rampenförmig ausgestaltete Sensierring gleitet an der Gegenrampe des Kupplungsgehäuseteils ab, wodurch sich der axiale Abstand vergrößert bis wieder die Klemmkraft der Klemmfeder ausreicht, um den Sensierring reibschlüssig an einer weiteren Bewegung in Umfangsrichtung zu hindern. Bei einem Öffnen der Reibungskupplung kann durch den verdrehten Sensierring die Tellerfeder an einer in axialer Richtung verschobenen Punkt an dem Sensierring anschlagen, so dass die Tellerfeder von einem Verstellring zum Nachstellen des verschleißbedingten Fehlabstands abhebt oder zumindest eine Klemmkraft auf den Verstellring reduziert. Der Verstellring ist ebenfalls in Umfangsrichtung mit einer Federkraft beaufschlagt, so dass der in axialer Richtung rampenförmige Verstellring an einer entsprechenden Gegenrampe der Anpressplatte abgleiten kann bis die von der Tellerfeder bereitgestellte Klemmkraft wieder ausreicht ein weiteres Verdrehen des Verstellrings zu verhindern. Der Verstellring kann dadurch in axialer Richtung einen größeren Abstand zwischen der Tellerfeder und der Anpressplatte überbrücken, wodurch der verschleißbedingte Fehlabstand der Anpressplatte zur Gegenplatte nachgestellt ist und die Tellerfeder mit einem entsprechend geringeren Hub die Anpressplatte auf die Gegenplatte bewegen kann.

Es besteht ein ständiges Bedürfnis Montagefehler bei der Herstellung von Kupplungsaggregaten mit einer kraftgesteuerten Nachstelleinrichtung zu vermeiden. Weiterhin besteht auch für andere Anwendungen der Bedarf, zwei gegeneinander verlagerbare, insbesondere gegeneinander verdrehbare Bauteile oder Baugruppen entgegen der Wirkung einer Zugfeder mittels dieser sicher zu verbinden.

Es ist die Aufgabe der Erfindung Maßnahmen aufzuzeigen, die eine sichere elastische Verbindung zweier Bauteile oder Baugruppen, insbesondere ein geringes Risiko von Montagefehlern bei der Herstellung von Reibungskupplungen mit einer kraftgesteuerten Nachstelleinrichtung ermöglichen.

Die Lösung der Aufgabe erfolgt erfindungsgemäß durch eine Nachstelleinrichtung für eine Reibungskupplung gemäß Patentanspruch 1. Bevorzugte Ausgestaltungen der Erfindung sind in den Unteransprüchen angegeben.

Erfindungsgemäß ist eine Zugfeder insbesondere für eine kraftgesteuerte Nachstelleinrichtung eines Kupplungsaggregats, insbesondere zur Bereitstellung einer Federkraft in Umfangsrichtung auf einen Sensierring relativ zu einem Kupplungsgehäuseteil und/oder zur Bereitstellung einer Federkraft in Umfangsrichtung auf einen Verstellring relativ zu einer Anpressplatte, vorgesehen mit einem Federkörper, insbesondere Spiralbogenfeder, zur Bereitstellung einer Federkraft, einem mit dem Federkörper verbundenen ersten Haken zur Verbindung mit einer Nachstelleinrichtung, insbesondere mit einem Sensierring und/oder mit einem Verstellring der Nachstelleinrichtung, und einem mit dem Federkörper verbundenen zweiten Haken zur Verbindung mit einer Reibungskupplung, insbesondere mit einem Kupplungsgehäuseteil und/oder mit einer Anpressplatte der Reibungskupplung, wobei erfindungsgemäß der erste Haken als im Wesentlichen geschlossene Öse ausgestaltet ist. Durch den insbesondere als geschlossenes Auge, vorzugsweise als volle deutsche Öse, ausgebildeten Haken, kann vermieden werden, dass ein axiales Ende des Hakens an einer schmalen Seitenfläche einer korrespondierenden Aussparung aufliegt, da der als geschlossene Öse ausgebildete Haken aufgrund der von dem Federkörper aufgeprägten Zugkraft von der schmalen Seitenfläche der Aussparung abrutschen würde. Dadurch wird vermieden, dass der Haken lediglich reibschlüssig an der Aussparung anliegt und fälschlicherweise die korrespondierende Aussparung tatsächlich nicht umgreift. Das Risiko einer nicht ausreichenden Befestigung der Zugfeder wird dadurch reduziert, so dass das Risiko von Montagefehlern verringert ist. Insbesondere wird vermieden, dass sich die Zugfeder infolge eines Montagefehlers löst und die Funktionsfähigkeit der Nachstelleinrichtung und/oder der Reibungskupplung beeinträchtigt oder sogar Beschädigungen an dem Kupplungsaggregat hervorruft. Der erste Haken und/oder der zweite Haken schließen einen Winkelbereich α ein, für den insbesondere α ≥ 300°, vorzugsweise α ≥ 350° und besonders bevorzugt α = 360° gilt.

Der erste Haken weist eine von dem zweiten Haken verschiedene Geometrie auf, so dass der erste Haken nicht auf einen für den zweiten Haken vorgesehenen Dorn passt und/oder der zweite Haken nicht auf einen für den ersten Haken vorgesehenen Dorn passt. Ein Einbau der Zugfeder in verdrehter Lage kann dadurch vermieden werden, so dass das Risiko eines Montagefehlers weiter reduziert ist.

Zusätzlich können die Flächennormalen der jeweiligen von dem ersten Haken und dem zweiten Haken begrenzten Öffnungen in unterschiedliche Richtungen weisen, wobei die Flächennormalen insbesondere unter unterschiedlichen Winkeln zu einer designierten Umfangsrichtung der Reibungskupplung ausgerichtet sind. Ein Einbau der Zugfeder in einer nicht beabsichtigten Lage kann dadurch vermieden werden, so dass das Risiko eines Montagefehlers weiter reduziert ist.

Insbesondere ist der erste Haken und/oder der zweite Haken durch mehr als eine volle Windung ausgestaltet. Dies ermöglicht es die im Wesentlichen geschlossene Öse durch ein Verwinden beispielsweise eines mit dem Federkörper verbundenen Drahts, insbesondere Federdrahts, auszubilden. Da im Bereich des jeweiligen Hakens keine Federkraft bereitgestellt werden muss, können die einzelnen Windungen in axialer Richtung aneinander anliegen, so dass sich ein kompakter und bauraumsparender Aufbau für den jeweiligen Haken ergibt.

Der erste Haken weist eine von der Kreisform abweichende nach innen weisende Anlagefläche auf, wobei die Anlagefläche in der Seitenansicht insbesondere eckig, vorzugsweise rechteckig, ausgestaltet ist. Dadurch lassen sich Lagefehler der Zugfeder bei der Montage der Zugfeder vermeiden. Ferner kann die Präzision der Ausrichtung der Zugfeder relativ zur Nachstelleinrichtung und/oder zur Reibungskupplung verbessert werden.

Besonders bevorzugt ist die Zugfeder, insbesondere der Federkörper, im Wesentlichen bogenförmig ausgerichtet. Die Zugfeder kann insbesondere in Umfangsrichtung der Reibungskupplung ausgerichtet sein, wobei die Krümmung der Zugfeder im Wesentlichen der Krümmung des designierten Radius entspricht, auf dem die Zugfeder relativ zur Reibungskupplung positioniert werden soll. Dies ermöglicht es einen entsprechend größeren Federkörper vorzusehen. Ferner kann die Zugfeder über einen entsprechend größeren Winkelbereich ein Verdrehen des Sensierrings und/oder des Verstellrings ermöglichen.

Insbesondere weist der Federkörper mindestens zwei in Reihe geschaltete Federpakete auf, wobei zwei nachfolgende Federpakete über ein Zwischenstück beabstandet zueinander miteinander verbunden sind. Die einzelnen Federpakete können unter Berücksichtigung des durch die Reibungskupplung und der Nachstelleinrichtung zur Verfügung stehenden Bauraums geeignet in Umfangsrichtung verteilt werden. Insbesondere können die Federpakete als Spiralfedern ausgestaltet sein, die insbesondere eine unterschiedliche Anzahl an Windungen aufweisen. Durch die unsymmetrische Gestaltung der Zugfeder wird die korrekte Montage der Zugfeder in der beabsichtigten Ausrichtung erleichtert.

In weiterer vorteilhafter Ausgestaltungsweise kann zur sicheren elastischen Verbindung zweier Bauteile oder Baugruppen, insbesondere einer Nachstelleinrichtung einer Reibungskupplung eine Zugfeder vorgesehen sein, welche einen ersten Windungsabschnitt mit mehreren um eine Mittellinie angeordneten Windungen und einen zweiten, an einem stirnseitigen Ende angeordneten Windungsabschnitt mit zumindest einer Windung weist, wobei eine zweite Mittellinie des zweiten Windungsabschnittes gegenüber der ersten Mittellinie beabstandet vorgesehen ist. Hierbei bildet der stirnseitige Windungsabschnitt bevorzugt aus einer oder mehreren Windungen größeren, gleichen oder bevorzugt kleineren Durchmessers als dem Durchmesser des mittleren, im Wesentlichen das Federmoment bereitstellenden Windungsabschnitt eine bevorzugt geschlossene Öse, die auf eine entsprechende Aufnahme eines Bauteils sicher aufgesteckt werden kann. Hierbei sind die beiden Mittellinien zur Aufrechterhaltung einer guten Kraftübertragung in Zugrichtung der Zugfeder parallel ausgerichtet, können jedoch auf gegeneinander in einem vorgegebenen Winkel zueinander angeordnet sein. Als besonders vorteilhaft hat sich bei Anwendung in gegeneinander um eine gemeinsame Drehachse relativ verdrehbaren Bauteilen erwiesen, wenn die Zugfeder und damit die Mittellinien bogenförmig angeordnet ist.

Die beiden Windungsabschnitte können dabei in unterschiedlichem Drehsinn gewickelt sein, was bedeutet, dass beispielsweise im Anschluss an einen Drehsinn der Windungen des ersten Windungsabschnitts gegen den Uhrzeigersinn eine oder mehrere Windungen des zweiten Windungsabschnitts unter radialer Erweiterung des Außenumfangs der Endwindung des ersten Windungsabschnitts im Uhrzeigersinn gewickelt sind. Hierbei ist besonders der Wendepunkt zwischen den beiden Windungsabschnitten unter Zug hohen Belastungen ausgesetzt. Es wird daher in besonders vorteilhafter Weise eine Zugfeder vorgeschlagen, bei der alle Windungen in demselben Drehsinn gewickelt sind. Hierbei wird die Endwindung des ersten Abschnitts auf den Außenumfang des zweiten Windungsabschnitts erweitert und eine oder mehrere Windungen in demselben Drehsinn gewickelt. Durch die gleichsinnige Wicklung wird im Übergangsbereich der beiden Windungsabschnitte eine gleichmäßigere Spannungsverteilung erzielt, so dass die Bruchbeständigkeit der Zugfeder erhöht und eine einfache Fertigung erzielt werden kann.

Die Erfindung betrifft ferner eine Nachstelleinrichtung für eine Reibungskupplung, insbesondere für eine Doppelkupplung, zum Nachstellen eines verschleißbedingten Fehlabstands einer Anpressplatte zu einer Gegenplatte der Reibungskupplung, mit einem in Umfangsrichtung federbelasteten und verdrehbaren Sensierring zum Sensieren des verschleißbedingten Fehlabstands der Anpressplatte zu der Gegenplatte und einem in Umfangsrichtung federbelasteten und verdrehbaren Verstellring zum Nachstellen des verschleißbedingten Fehlabstands der Anpressplatte zu der Gegenplatte, wobei mit dem Sensierring eine Zugfeder, die wie vorstehend beschrieben aus- und weitergebildet sein kann, und/oder mit dem Verstellring eine Zugfeder, die wie vorstehend beschrieben aus- und weitergebildet sein kann, zur Bereitstellung einer Federkraft in Umfangsrichtung verbunden ist. Dadurch ist ein geringes Risiko von Montagefehlern bei der Herstellung von Kupplungsaggregaten mit einer kraftgesteuerten Nachstelleinrichtung ermöglicht.

Die Nachstelleinrichtung weist vorzugsweise ein Betätigungselement, insbesondere Hebelfeder, zum Aufbringen einer Betätigungskraft an die Anpressplatte über den Verstellring auf. Insbesondere ist eine mit dem Betätigungselement verbundenen Klemmfeder zum Festsetzen des Sensierrings während eines tolerierbaren verschleißbedingten Fehlabstands der Anpressplatte zu der Gegenplatte vorgesehen. Die Nachstelleinrichtung kann im Übrigen insbesondere wie in DE 10 2008 033 030 A1 beschrieben aus- und weitergebildet sein, auf deren Inhalt hiermit als Teil der Erfindung Bezug genommen wird.

Der Sensierring und/oder der Verstellring weist einen Aufnahmedorn zur formschlüssigen Verbindung mit dem ersten Haken der Zugfeder auf, wobei der Aufnahmedorn eine von der Kreisform abweichende Querschnittsfläche aufweist. Der Aufnahmedorn kann in das Auge der von dem ersten Haken ausgebildeten Öse eingesteckt sein. Vorzugsweise weist der Aufnahmedorn eine Konturierung auf, die an die Form des ersten Hakens angepasst ist. Der äußere Rand der Querschnittsfläche des Aufnahmedorns korrespondiert insbesondere mit der nach radial innen weisenden Anlagefläche des ersten Hakens. Der erste Haken kann dadurch drehfest mit dem Aufnahmedorn formschlüssig verbunden sein.

Die Erfindung betrifft ferner ein Kupplungsaggregat, insbesondere Doppelkupplung, mit mindestens einer Reibungskupplung, wobei die Reibungskupplung eine Anpressplatte und eine mit einem Kupplungsgehäuseteil verbundene Gegenplatte zum Verpressen einer Kupplungsscheibe zwischen der Anpressplatte und der Gegenplatte aufweist, und einer Nachstelleinrichtung, die wie vorstehend beschrieben aus- und weitergebildet sein kann, zum Nachstellen eines verschleißbedingten Fehlabstands der Anpressplatte zu der Gegenplatte. Dadurch ist ein geringes Risiko von Montagefehlern bei der Herstellung von Kupplungsaggregaten mit einer kraftgesteuerten Nachstelleinrichtung ermöglicht. Das Kupplungsaggregat kann im Übrigen insbesondere wie in DE 10 2008 033 030 A1 beschrieben aus- und weitergebildet sein, auf deren Inhalt hiermit als Teil der Erfindung Bezug genommen wird.

Vorzugsweise weist das Kupplungsgehäuseteil und/oder die Anpressplatte einen Haltedorn zur formschlüssigen Verbindung mit dem ersten Haken der Zugfeder auf, wobei der Haltedorn insbesondere eine von der Kreisform abweichende Querschnittsfläche aufweist. Der Haltedorn kann in das Auge der von dem zweiten Haken ausgebildeten Öse eingesteckt sein. Vorzugsweise weist der Haltedorn eine Konturierung auf, die an die Form des zweiten Hakens angepasst ist. Der äußere Rand der Querschnittsfläche des Haltedorns korrespondiert insbesondere mit der nach radial innen weisenden Anlagefläche des zweiten Hakens. Der zweite Haken kann dadurch drehfest mit dem Haltedorn formschlüssig verbunden sein.

Die Erfindung betrifft ferner ein Verfahren zur Überprüfung einer korrekten Montage eines Kupplungsaggregats, bei dem eine Zugfeder, die wie vorstehend beschrieben aus- und weitergebildet sein kann, über den ersten Haken mit einer kraftgesteuerten Nachstelleinrichtung, die insbesondere wie vorstehend beschrieben aus- und weitergebildet sein kann, und über den zweiten Haken mit einer Reibungskupplung des Kupplungsaggregats, das insbesondere wie vorstehend beschrieben aus- und weitergebildet sein kann, verbunden wird und eine formschlüssige Verbindung des ersten Hakens mit der Nachstelleinrichtung und/oder eine formschlüssige Verbindung des zweiten Hakens mit der Reibungskupplung durch eine optisehe Kontrolle, insbesondere mit Hilfe einer vorzugsweise automatischen Kameraüberwachung, überprüft wird. Durch die Ausgestaltung des ersten Hakens und/oder des zweiten Hakens als Öse ergibt sich eine definierte Lage für den jeweiligen Haken, wenn der Haken auf einen Dorn aufgesteckt ist. Diese Lage kann optisch überprüft werden, indem beispielsweise der Umriss des Hakens relativ zum Umriss des jeweiligen Dorns überprüft wird. Dies lässt sich mit Hilfe einer Kameraüberwachung besonders schnell und einfach durchführen. Vorzugsweise wird mit Hilfe einer Bilderkennung, die insbesondere mit Hilfe einer geeigneten Bilderkennungssoftware computerunterstützt erfolgen kann, die Überprüfung automatisch durchgeführt. Montagefehler können dadurch schnell und effizient erkannt und korrigiert werden. Dadurch ist ein geringes Risiko von Montagefehlern bei der Herstellung von Kupplungsaggregaten mit einer kraftgesteuerten Nachstelleinrichtung ermöglicht.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Ansicht eines bekannten Kupplungsaggregats,
- Fig. 2:: eine schematische Ansicht eines erfindungsgemäßen Kupplungsaggregats,
- Fig. 3:: eine schematische Detailansicht des Kupplungsaggregats aus Fig. 2,
- Fig. 4:: eine weitere schematische Detailansicht des Kupplungsaggregats aus Fig. 2 und
- Fig. 5:: eine gegenüber der Zugfeder der Fig. 5 veränderte Zugfeder in Teilansicht.

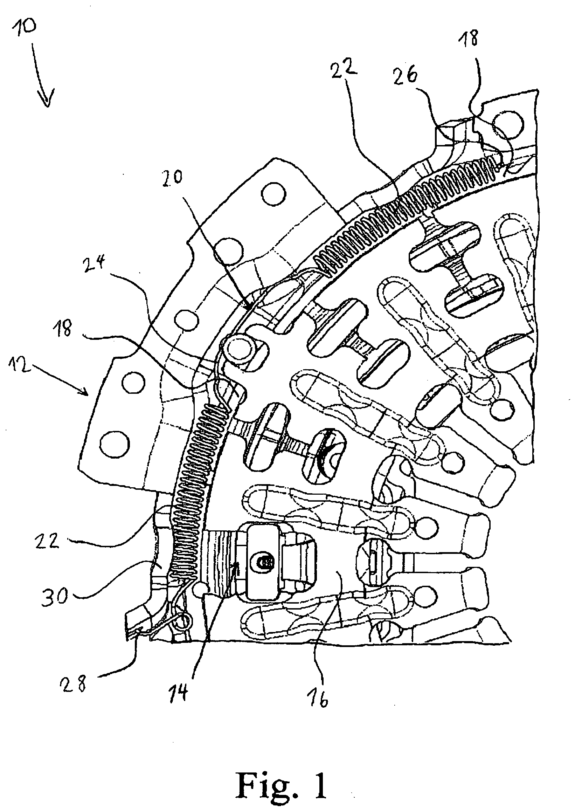

Das in Fig. 1 dargestellte Kupplungsaggregat 10 weist eine Reibungskupplung 12 mit einer kraftgesteuerten Nachstelleinrichtung 14 auf. Die Nachstelleinrichtung 14 weist eine Klemmfeder 16 auf, die auf einen Sensierring 18 drückt. Bei einem hinreichenden Verschleiß der Reibungskupplung 12 reicht die Anpresskraft der Klemmfeder 18 nicht mehr aus den Sensierring 18 reibschlüssig zu halten, so dass der Sensierring 18 mit Hilfe einer in Umfangsrichtung wirkenden Zugfeder 20 verdreht werden kann. Der Sensierring 18 kann dadurch auf einer Rampe abgleiten bis der Sensierring 18 wieder von der Klemmfeder 18 festgehalten werden kann. Die Zugfeder 20 weist im dargestellten Ausführungsbeispiel zwei in Reihe geschaltete als Spiralfeder ausgestaltete Federpakete 22 auf, die über ein Zwischenstück 24 einstückig miteinander verbunden sind. Die aus einem einzelnen Federdraht hergestellte Zugfeder 20 ist über einen halbkreisförmigen ersten Haken 26 mit dem Sensierring 18 der Nachstelleinrichtung 14 und über einen halbkreisförmigen zweiten Haken 28 mit einem Kupplungsgehäuseteil 30 der Reibungskupplung 12 verbunden.

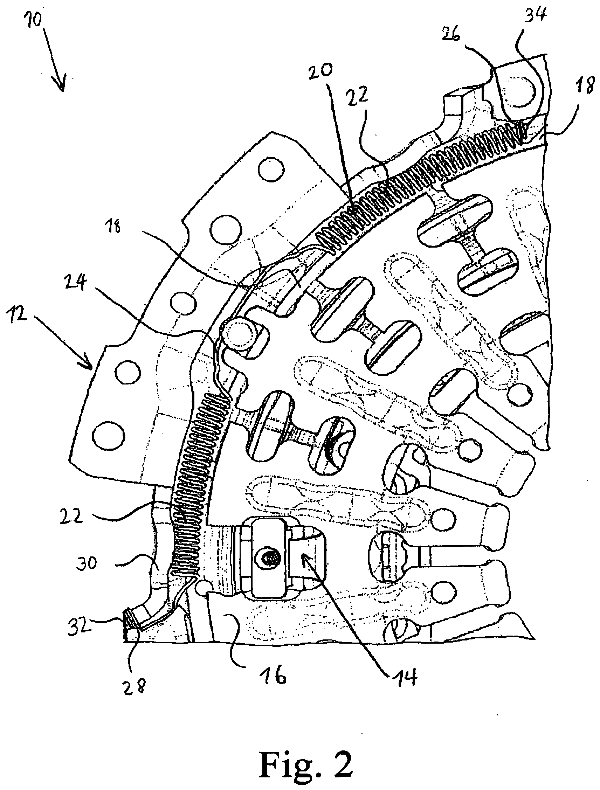

Bei dem in Fig. 2 dargestellten erfindungsgemäßen Kupplungsaggregat 10 ist im Vergleich zu dem in Fig. 1 dargestellten Kupplungsaggregat die Zugfeder 20 über einen als geschlossene Öse ausgestalteten ersten Haken 26 mit dem Sensierring 18 und über einen als geschlossene Öse ausgestalteten zweiten Haken 28 mit dem Kupplungsgehäuseteil 30 verbunden. Der erste Haken 26 und der zweite Haken 28 können unterschiedlich geformt und/der unterschiedlich ausgerichtet sein, damit bei der Montage nicht der erste Haken 26 mit dem zweiten Haken 28 verwechselt wird und die Zugfeder 20 falsch herum montiert wird.

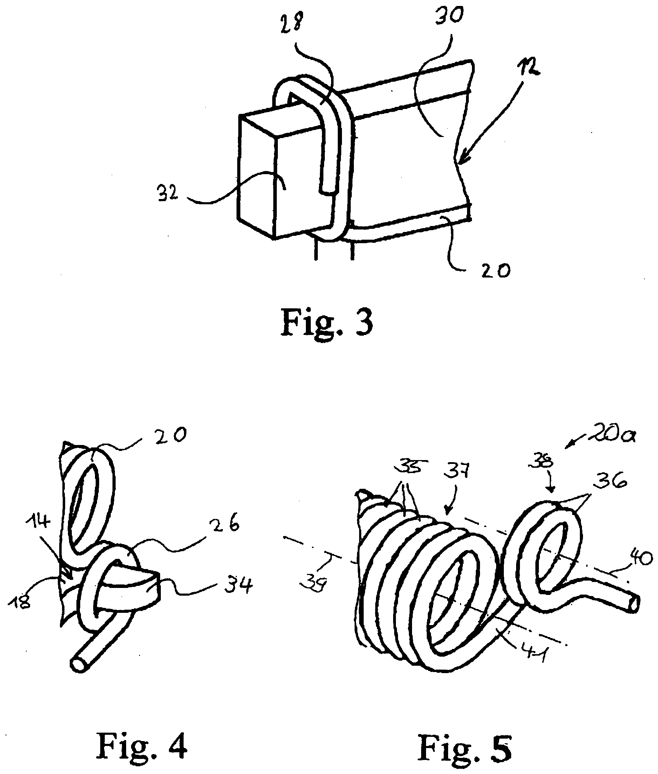

Wie in Fig. 3 dargestellt kann der zweite Haken 28 durch nicht ganz zwei Windungen eine im Wesentlichen rechteckförmige Öse ausbilden, so dass der zweite Haken drehfest mit einem Haltedorn 32 des Kupplungsgehäuseteils 30 verhakt werden kann, der eine zur Konturierung des zweiten Hakens 28 korrespondierende Querschnittsfläche aufweist. Der zweite Haken 28 kann mit Spielpassung auf dem Haltedorn 32 aufgesteckt sein. Der Haltedorn 32 ist teilweise entgegen der Richtung der von der Zugfeder 20 bereitgestellten Federkraft ausgerichtet, so dass die Federkraft der Zugfeder 20 den zweiten Haken 28 sicher auf dem Haltedorn 32 hält.

Wie in Fig. 4 dargestellt kann der erste Haken 26 mit einem Aufnahmedorn 34 des Sensierrings 18 verhakt werden. Der erste Haken 26 bildet mit ca. 1,5 Windungen eine geschlossene Öse aus, die auf den Aufnahmedorn 34 aufgesteckt ist. Der Aufnahmedorn 34 ist im Wesentlichen entgegen der Richtung der von der Zugfeder 20 bereitgestellten Federkraft ausgerichtet, so dass die Federkraft der Zugfeder 20 den ersten Haken 28 sicher auf dem Aufnahmedorn 34 hält. Die Formgestaltung des ersten Hakens 26 und des Aufnahmedorns 34 können alternativ mit der Formgestaltung des zweiten Hakens 28 und des Haltedorns 32 vertauscht sein.

Die Zugfeder 20 kann auch für eine Verbindung mit einer Anpressplatte der Reibungskupplung 10 und einem Nachstellring der Nachstelleinrichtung 14 angepasst sein. Die vorstehenden Ausführungen zur Verbindung der Zugfeder 20 mit dem Kupplungsgehäuseteil 30 der Reibungskupplung 10 und dem Sensierring 18 der Nachstelleinrichtung 14 können analog gelten.

Fig. 5 zeigt die gegenüber der Zugfeder 20 der Figur 4 mit gegensätzlichem Drehsinn gewickelte abgeänderte, lediglich teilweise dargestellte Zugfeder 20a mit in demselben Drehsinn gewickelten Windungen 35, 36 der Windungsabschnitte 37, 38. Die entlang der Mittellinie 39 gegen den Uhrzeigesinn gewickelten Windungen 35 übernehmen das Federmoment wie Zugmoment der Zugfeder 20a, während die ebenfalls gegen den Uhrzeigersinn um die Mittellinie 40 gewickelten Windungen 36 des Windungsabschnitts 38 die Öse zur Aufhängung der Zugfeder 20a bilden. Der Übergang zwischen den beiden Windungsabschnitten 38, 39 ist durch die Endwindung 41 des Windungsabschnitts 37 gebildet. Diese ist über den Umfang der Windungen 35 hinaus radial auf den Außenumfang der nachfolgenden Windungen 36 erweitert. Der Durchmesser der Windungen 35 der in diesem Ausführungsbeispiel gezeigten Zugfeder 20a ist größer als der Durchmesser der Windungen 36. Die Endwindung 41 ist dabei unter Beabstandung der Mittellinien 39, 40 so ausgebildet, dass sich die gedachten Einhüllungen der Windungsabschnitte 37, 38 gerade berühren, so dass eine Einhängung der Zugfeder nahe der Mittellinie 39 erfolgen kann, ohne dass eine den Windungsabschnitt 38 aufnehmende Aufnahme wie Aufnahmedorn die Zugbewegung des ersten Windungsabschnitts 37 beeinträchtigt. Die bei Längung des ersten Windungsabschnitts 37 erfolgende Zugbelastung der Endwindung 41 ist infolge der Wicklung der beiden Windungsabschnitte in demselben Drehsinn um die jeweilige Mittellinie 39, 40 gleichmäßig verteilt. Der Windungsabschnitt 38 kann in ähnlicher oder derselben Ausführung am anderen Ende der Zugfeder 20a vorgesehen sein. Alternativ kann die Zugfeder 20a entsprechend der Zugfeder 20 der Figuren 1 bis 3 ausgebildet sein.

## Patentansprüche

1. Nachstelleinrichtung (14) für eine Reibungskupplung (12), insbesondere für eine Doppelkupplung, zum Nachstellen eines verschleißbedingten Fehlabstands einer Anpressplatte zu einer Gegenplatte der Reibungskupplung (12), mit
einem in Umfangsrichtung federbelasteten und verdrehbaren Sensierring (18) zum Sensieren des verschleißbedingten Fehlabstands der Anpressplatte zu der Gegenplatte und
einem in Umfangsrichtung federbelasteten und verdrehbaren Verstellring zum Nachstellen des verschleißbedingten Fehlabstands der Anpressplatte zu der Gegenplatte, und
einer Zugfeder (20, 20a) mit einem Federkörper (22) zur Bereitstellung einer Federkraft, einem mit dem Federkörper (22) verbundenen ersten Haken (26) und einem mit dem Federkörper (22) verbundenen zweiten Haken (28) zur Verbindung mit der Reibungskupplung (12), insbesondere mit einem Kupplungsgehäuseteil (30) und/oder mit der Anpressplatte der Reibungskupplung (12),
**dadurch gekennzeichnet, dass** der Sensierring (18) und/oder der Verstellring einen Aufnahmedorn (34) mit einer von der Kreisform abweichenden Querschnittsfläche zur formschlüssigen Verbindung mit dem ersten Haken (26) der Zugfeder (20, 20a) aufweist,
wobei der erste Haken (26) eine im Wesentlichen geschlossene Öse mit einer von der Kreisform abweichenden, nach innen weisenden Anlagefläche zur formschlüssigen Verbindung mit dem Aufnahmedorn (34) aufweist, und
wobei der zweite Haken (28) eine vom ersten Haken (26) verschiedene Geometrie aufweist, so dass der erste Haken (26) nicht auf einen für den zweiten Haken (28) vorgesehenen Dorn passt und/oder der zweite Haken (28) nicht auf den für den ersten Haken (26) vorgesehen Aufnahmedorn (34) passt.

2. Nachstelleinrichtung (14) nach Anspruch 1, wobei der erste Haken (26) und/oder der zweite Haken (28) durch mehr als eine volle Windung ausgestaltet ist.

3. Nachstelleinrichtung (14) nach Anspruch 1 oder 2, wobei die Anlagefläche des ersten Hakens (26) und/oder des zweiten Hakens (28) der Zugfeder (20, 20a) in der Seitenansicht eckig, vorzugsweise rechteckig, ausgestaltet ist.

4. Nachstelleinrichtung (14) nach einem der Ansprüche 1 bis 3, wobei der Federkörper (22) der Zugfeder (20, 20a) im Wesentlichen bogenförmig ausgerichtet ist.

5. Nachstelleinrichtung (14) nach einem der Ansprüche 1 bis 4, wobei der Federkörper (22) der Zugfeder (20, 20a) mindestens zwei in Reihe geschaltete Federpakete (22) aufweist, wobei zwei nachfolgende Federpakete (22) über ein Zwischenstück (24) beabstandet zueinander miteinander verbunden sind.

6. Kupplungsaggregat (10), insbesondere Doppelkupplung, mit mindestens einer Reibungskupplung (12), wobei die Reibungskupplung (12) eine Anpressplatte und eine mit einem Kupplungsgehäuseteil (30) verbundene Gegenplatte zum Verpressen einer Kupplungsscheibe zwischen der Anpressplatte und der Gegenplatte aufweist, und einer Nachstelleinrichtung (14) nach einem der Ansprüche 1 bis 5 zum Nachstellen eines verschleißbedingten Fehlabstands der Anpressplatte zu der Gegenplatte.

## Claims

1. Adjusting device (14) for a friction clutch (12), in particular for a double clutch, for adjusting a wear-induced faulty spacing of a pressure plate from a counterplate of the friction clutch (12), having
a sensing ring (18) which is spring-loaded and can be rotated in the circumferential direction for sensing the wear-induced faulty spacing of the pressure plate from the counterplate, and
an adjusting ring which is spring-loaded and can be rotated in the circumferential direction for adjusting the wear-induced faulty spacing of the pressure plate from the counterplate, and
a tension spring (20, 20a) with a spring body (22) for providing a spring force, a first hook (26) which is connected to the spring body (22), and a second hook (28) which is connected to the spring body (22), for connection to the friction clutch (12), in particular to a clutch housing part (30) and/or to the pressure plate of the friction clutch (12),
**characterized in that** the sensing ring (18) and/or the adjusting ring have/has a receiving mandrel (34) with a cross-sectional area which differs from the circular shape for positively locking connection to the first hook (26) of the tension spring (20, 20a),
the first hook (26) having a substantially closed eye with an inwardly pointing bearing face which differs from the circular shape for positively locking connection to the receiving mandrel (34), and
the second hook (28) having a geometry which is different from the first hook (26), with the result that the first hook (26) does not fit onto a mandrel which is provided for the second hook (28), and/or the second hook (28) does not fit onto the receiving mandrel (34) which is provided for the first hook (26).

2. Adjusting device (14) according to Claim 1, the first hook (26) and/or the second hook (28) being configured by more than one complete coil.

3. Adjusting device (14) according to Claim 1 or 2, the bearing face of the first hook (26) and/or of the second hook (28) of the tension spring (20, 20a) being of angular, preferably rectangular, configuration in the side view.

4. Adjusting device (14) according to one of Claims 1 to 3, the spring body (22) of the tension spring (20, 20a) being oriented in a substantially arcuate manner.

5. Adjusting device (14) according to one of Claims 1 to 4, the spring body (22) of the tension spring (20, 20a) having at least two spring assemblies (22) which are connected in series, two following spring assemblies (22) being connected to one another via an intermediate piece (24) such that they are spaced apart from one another.

6. Clutch assembly (10), in particular double clutch, having at least one friction clutch (12), the friction clutch (12) having a pressure plate and a counterplate which is connected to a clutch housing part (30) for pressing a clutch plate between the pressure plate and the counterplate, and an adjusting device (14) according to one of Claims 1 to 5 for adjusting a wear-induced faulty spacing of the pressure plate from the counterplate.

## Revendications

1. Dispositif de rattrapage (14) pour un embrayage à friction (12), en particulier pour un double embrayage, pour le rattrapage d'un espacement incorrect provoqué par l'usure entre une plaque de pressage et une plaque conjuguée de l'embrayage à friction (12), comprenant
une bague de détection (18) sollicitée par ressort et pouvant tourner dans la direction périphérique pour détecter l'espacement incorrect provoqué par l'usure de la plaque de pressage par rapport à la plaque conjuguée et
une bague de réglage sollicitée par ressort et pouvant tourner dans la direction périphérique pour le rattrapage de l'espace incorrect provoqué par l'usure de la plaque de pressage par rapport à la plaque conjuguée et
un ressort de traction (20, 20a) muni d'un corps de ressort (22) pour fournir une force de ressort, d'un premier crochet (26) connecté au corps de ressort (22) et d'un deuxième crochet (28) connecté au corps de ressort (22) pour la connexion à l'embrayage à friction (12), en particulier à une partie de boîtier d'embrayage (30) et/ou à la plaque de pressage de l'embrayage à friction (12), **caractérisé en ce que** la bague de détection (18) et/ou la bague de réglage présente(nt) un mandrin de réception (34) avec une surface en section transversale s'écartant de la forme circulaire pour la connexion par engagement par correspondance de formes au premier crochet (26) du ressort de traction (20, 20a),
le premier crochet (26) présentant un oeillet essentiellement fermé avec une surface d'appui s'écartant de la forme circulaire, orientée vers l'intérieur pour la connexion par engagement par correspondance de formes avec le mandrin de réception (34), et
le deuxième crochet (28) présentant une géométrie différente de celle du premier crochet (26) de telle sorte que le premier crochet (26) ne s'ajuste pas à un mandrin prévu pour le deuxième crochet (28) et/ou que le deuxième crochet (28) ne s'ajuste pas au mandrin de réception (34) prévu pour le premier crochet (26).

2. Dispositif de rattrapage (14) selon la revendication 1, dans lequel le premier crochet (26) et/ou le deuxième crochet (28) est/sont configuré(s) par plus d'un enroulement complet.

3. Dispositif de rattrapage (14) selon la revendication 1 ou 2, dans lequel la surface d'appui du premier crochet (26) et/ou du deuxième crochet (28) du ressort de traction (20, 20a) est configurée en vue de côté sous forme angulaire, de préférence rectangulaire.

4. Dispositif de rattrapage (14) selon l'une quelconque des revendications 1 à 3, dans lequel le corps de ressort (22) du ressort de traction (20, 20a) est orienté essentiellement en forme d'arc.

5. Dispositif de rattrapage (14) selon l'une quelconque des revendications 1 à 4, dans lequel le corps de ressort (22) du ressort de traction (20, 20a) présente au moins deux paquets de ressorts (22) montés en série, deux paquets de ressorts successifs (22) étant connectés l'un à l'autre à distance l'un de l'autre par le biais d'une pièce intermédiaire (24) .

6. Unité d'embrayage (10), en particulier double embrayage, comprenant au moins un embrayage à friction (12), l'embrayage à friction (12) présentant une plaque de pressage et une plaque conjuguée connectée à une partie de boîtier d'embrayage (30) pour presser un disque d'embrayage entre la plaque de pressage et la plaque conjuguée, et un dispositif de rattrapage (14) selon l'une quelconque des revendications 1 à 5, pour le rattrapage d'un espacement incorrect provoqué par l'usure entre la plaque de pressage et la plaque conjuguée.
